# EUROPÄISCHE PATENTSCHRIFT

(11) **EP 3 461 693 B1**
(45) Veröffentlichungstag und Bekanntmachung des Hinweises auf die Patenterteilung: **28.10.2020**
(21) Anmeldenummer: 18000734.6
(22) Anmeldetag: 14.09.2018
(51) Int. Cl.: B60R 21/02

(54) **RÜCKHALTESYSTEM FÜR EINEN FAHRER EINES FAHRZEUGS**
RETENTION SYSTEM FOR A DRIVER OF A VEHICLE
SYSTÈME DE RETENUE POUR UN CONDUCTEUR DE VÉHICULE

(30) Priorität: 28.09.2017 DE 202017005064 U
(43) Veröffentlichungstag der Anmeldung: 03.04.2019
(73) Patentinhaber: HSM GmbH & Co. KG, 85119 Ernsgaden (DE)
(72) Erfinder: Sauermann, Johann, 85119 Ernsgaden (DE)
(74) Vertreter: Witzany, Manfred

(56) Entgegenhaltungen:
- EP-A1- 2 682 310
- DE-A1- 2 919 190
- DE-A1- 19 960 432

## Beschreibung

Die Erfindung betrifft ein Fahrzeug und ein Rückhaltesystem für einen Fahrer des Fahrzeugs, insbesondere eines Flurförderfahrzeugs. Dieses weist mindestens einen Schutzbügel auf, der an der mindestens einer Säule des Fahrzeugs abgestützt ist.

Aus der EP 2 682 310 A ist ein gattungsgemäßes Rückhaltesystem bekannt. Es weist einen Schutzbügel auf, der an einer hinteren Säule eines Flurförderfahrzeugs abgestützt ist. Dieser Schutzbügel ist zwischen einer im Wesentlichen horizontalen Rückhaltestellung und einer im Wesentlichen vertikalen Freigabestellung verschwenkbar, um einerseits eine sichere Rückhaltewirkung und andererseits ein einfaches Ein- bzw. Aussteigen zu ermöglichen. Dieses Rückhaltesystem hat sich in Praxis vielfach bewährt und bildet den Ausgangspunkt der vorliegenden Erfindung.

Aus der DE 199 60 432 A1 ist ein Scharnier, insbesondere für eine Fahrzeugtür bekannt. Dieses Scharnier ist mittels eines Exzenters einstellbar, um Justiermöglichkeiten an der Fahrzeugtür zur Verfügung zu stellen.

Aus der DE 29 19 190 A1 ist ein Türband zur schwenkbaren Befestigung, insbesondere einer Fahrzeugtür bekannt. Dieses Türband weist eine Exzenterverstellung auf, um eine Justagemöglichkeit der Tür zu erreichen.

Der Erfindung liegt die Aufgabe zugrunde, ein Fahrzeug der eingangs genannten Art zu schaffen, dessen Rückhaltesystem sich leicht an unterschiedliche Fahrzeuggeometrien anpassen lässt.

Diese Aufgabe wird erfindungsgemäß mit den folgenden Merkmalen gelöst:
Das erfindungsgemäße Fahrzeug weist ein Rückhaltesystem mit mindestens einem Schutzbügel auf. Dabei ist es grundsätzlich unerheblich, ob dieser mindestens eine Schutzbügel zum Ein- und Aussteigen aus dem Fahrzeug verschwenkbar oder starr ist. In der Regel wird nur der fahrerseitige Zugang von einem verschwenkbaren Schutzbügel gesichert, während die gegenüberliegende Seite von einem feststehenden Schutzbügel abgesichert wird. Außerdem spielt es keine Rolle, ob der mindestens eine Schutzbügel an einem Ende frei oder beidendig an Säulen abgestützt ist. Der vorliegende Erfindungsgegenstand ist für alle genannten Fälle anwendbar. Es hat sich herausgestellt, dass die Fahrerkabinen von Fahrzeugen immer größer werdenden Toleranzen unterworfen sind. Dies trifft insbesondere auch für die Säulen zu, die üblicherweise ein Kabinendach halten. Diese Säulen werden häufig recht dünnwandig ausgebildet und verwinden sich beim Zusammenbau des Fahrzeugs. Nachdem aber das Rückhaltesystem an mindestens einer der Säulen festgelegt wird, führen bereits geringfügige Verwindungen der Säulen zu großen Ausrichtungsfehlern des mindestens einen Schutzbügels. Diese Ausrichtungsfehler können in extremen Fällen dazu führen, dass der mindestens eine Schutzbügel so weit seitlich aus dem Fahrzeug herausragt, dass dieser beim Rangieren beschädigt werden kann. Alternativ kann der Schutzbügel bei einer Verwindung in die Gegenrichtung auch die Bewegungsfreiheit des Fahrers erheblich einschränken. Diese Probleme sollen durch den vorliegenden Erfindungsgegenstand gelöst werden. Hierzu ist mindestens ein Exzenter vorgesehen, durch den der mindestens eine Schutzbügel relativ zur mindestens einen Säule, an der er befestigt ist, auszurichten. Damit kann durch Verdrehen des mindestens einen Exzenters die Winkellage des mindestens einen Schutzbügels eingestellt werden, um auf diese Weise Fertigungstoleranzen der mindestens einen Säule auszugleichen. Der mindestens eine Exzenter hat gegenüber anderen Verstellmöglichkeiten den besonderen Vorteil, dass er selbsthemmend wirkt. Dadurch wird verhindert, dass der mindestens eine Schutzbügel im Falle eines Unfalls nach außen verschwenkt wird und dabei die geforderte Schutzwirkung verloren geht. Auf diese Weise sorgt der mindestens eine Exzenter für die erforderliche hohe Stabilität der Verbindung zwischen dem mindestens einen Schutzbügel und der mindestens einen Säule. Zusätzlich ist der mindestens eine Schutzbügel auch durch mindestens ein Haltemittel arretierbar. Das mindestens eine Haltemittel ist dabei vorzugsweise eine Schraube, kann jedoch auch in anderer Weise realisiert werden. Dieses zusätzliche Haltemittel verleiht der Verbindung zwischen dem mindestens einen Schutzbügel und der mindestens einen Säule zusätzliche Festigkeit und verhindert insbesondere ein unbeabsichtigtes Verstellen des mindestens einen Exzenters. Für kritische Anwendungsfälle ist es gemäß der Erfindung vorgesehen, dass mindestens zwei der Exzenter vorgesehen sind, die den mindestens einen Schutzbügel in unterschiedliche Schwenkrichtungen ausrichten.

Zusätzlich ist es vorteilhaft, wenn an der mindestens einen Säule mindestens eine konkav gekrümmte Fläche vorgesehen ist. Diese konkav gekrümmte Fläche ist dabei passend zu mindestens einer konvex gekrümmten Fläche von mindestens einer Abstützung des mindestens einen Schutzbügels gebildet. Auf diese Weise ergibt sich eine vorteilhafte Schwenkachse für den mindestens einen Schutzbügel, um diesen einfach verschwenken zu können. Aufgrund der zwangsweise erzeugten Schwenkachse ist das Verschwenken des mindestens einen Schutzbügels zu Justierzwecken relativ einfach durchzuführen. Ist zusätzlich der oben genannte mindestens eine Exzenter vorgesehen, so ergibt sich durch diese gekrümmten Flächen eine besonders feinfühlige Winkelverstellung durch den mindestens einen Exzenter. Außerdem ergibt sich der Vorteil, dass beim Verschwenken des mindestens einen Schutzbügels die mindestens eine Säule keinerlei Reibungskräften ausgesetzt ist. Damit sind Beschädigungen der mindestens einen Säule beim Verschwenken des mindestens einen Schutzbügels ausgeschlossen.

Vorzugsweise wird die mindestens eine Säule von mindestens einer Schelle umfasst, die mindestens ein Langloch aufweist. In dieses mindestens eine Langloch greift der mindestens eine Exzenter ein, um eine Verstellung des mindestens einen Schutzbügels quer zur Längserstreckung des mindestens einen Langlochs zu realisieren. Dieser Aufbau ist besonders einfach und kann auch kostengünstig in bereits bestehende Rückhaltesysteme integriert werden.

Da hauptsächlich eine Ausrichtung des mindestens einen Schutzbügels um eine annähernd vertikale Achse wichtig ist, ist das mindestens eine Langloch parallel zur mindestens einen Säule +/- 30° ausgebildet. Soll dagegen eine Justierung des mindestens einen Schutzbügels auch um eine horizontale Achse erfolgen, sollte das Langloch im Wesentlichen horizontal ausgerichtet sein. Die innenseitigen, ebenen Flächen des mindestens einen Langlochs sorgen in jedem Fall dafür, dass von der rotatorischen Ausrichtung des mindestens einen Exzenters nur eine Bewegungskomponente auf den mindestens einen Schutzbügel übertragen wird. Dies erlaubt eine präzise Einstellung des mindestens einen Schutzbügels relativ zur mindestens einen Säule.

Die konkav gekrümmte Fläche ist vorzugsweise hohlzylindrisch geformt. Auf diese Weise ergibt sich eine wohldefinierte Schwenkachse, die durch die Zylinderachse des Hohlzylinders definiert ist.

Um die Abstützung des mindestens einen Schutzbügels gut an der mindestens einen Säule fixieren zu können, ist es außerdem vorteilhaft, wenn die mindestens eine Abstützung beidseits gekrümmt geformt ist. Auf diese Weise kann die mindestens eine Abstützung einfach zwischen Backen klemmend gehalten werden, von denen mindestens eine fest an der mindestens einen Säule abgestützt ist.

Zur sicheren Fixierung der mindestens einen Abstützung ist es schließlich vorteilhaft, wenn die mindestens eine Abstützung von mindestens einem Haltemittel durchsetzt ist, welches die Backen gegeneinander spannt. Auf diese Weise ergibt sich eine günstige Presswirkung der Backen gegen die mindestens eine Abstützung, so dass die Verbindung der mindestens einen Abstützung mit der mindestens einen Säule optimal ist.

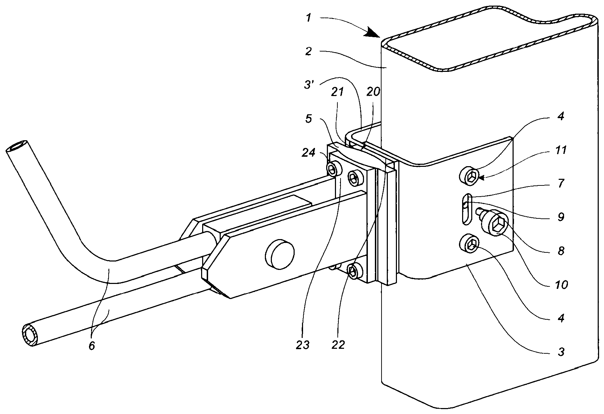

Die einzige Figur zeigt eine räumliche Darstellung eines Ausschnitts eines Flurförderfahrzeugs 1, von dem im Wesentlichen nur eine Säule 2 zu sehen ist. An dieser Säule 2 sind zwei Schellen 3, 3' mittels Schrauben 4 festgelegt. Alternativ zu den Schrauben 4 kann die Schelle 3 auch als Klemmschelle ausgebildet sein, um auf diese Weise ein Anbohren der Säule 2 zu vermeiden. Dies kann insbesondere bei schwach ausgebildeten Säulen 2 von Bedeutung sein. An der Schelle 3 ist eine Abstützung 5 abgestützt, die einen verschwenkbaren Schutzbügel 6 trägt.

In der Schelle 3 ist außerdem ein Langloch 7 vorgesehen, in das ein Exzenter 8 eingreift. Dieser Exzenter 8 ist an einer Gewindebohrung 9 der Säule 2 abgestützt. Durch Verdrehen des Exzenters 8 erzeugt ein Exzenterkopf 10 eine Drehbewegung, die auf das Langloch 7 übertragen wird. Die vertikale Komponente dieser Drehbewegung wird dabei durch das Langloch 7 eliminiert und lediglich die horizontale Bewegungskomponente auf die Schelle 3 übertragen. Auf diese Weise wird die Schelle 3 geringfügig um eine im Wesentlichen vertikale Achse verschwenkt, um auf diese Weise den Schutzbügel 6 korrekt auf das Flurförderfahrzeug 1 auszurichten. Die Schrauben 4 bilden dabei ein zusätzliches Haltemittel 11, welches die Exzenterstellung sichert.

Die Abstützung 5 ist linsenförmig ausgebildet und besitzt beidseitig konvex gekrümmte Flächen 20, die im Wesentlichen kreiszylinderförmig ausgebildet sind. Im Anlagebereich der Abstützung 5 ist die Schelle 3' mit einer konkaven Fläche 21 ausgebildet, die passend zur konvexen Fläche 20 der Abstützung 5 ist. Diese konkave Fläche 21 bildet eine Backe 22, die fest mit der Schelle 3' verbunden ist. Dieser Backe 22 gegenüberliegend ist eine weitere Backe 23 vorgesehen, die ebenfalls eine konkave Fläche 21 aufweist, welche passend zur konvexen Fläche 20 der Abstützung 5 ausgebildet ist. Die Backen 22, 23 und die Abstützung 5 sind von Haltemitteln 24 durchsetzt, um die gesamte Anordnung zu fixieren. Auf diese Weise ergibt sich eine vorteilhafte Schwenkachse, um den Schutzbügel 6 justieren zu können.

### Bezugszeichenliste

- 1: Flurförderfahrzeug
- 2: Säule
- 3, 3': Schelle
- 4: Schraube
- 5: Abstützung
- 6: Schutzbügel
- 7: Langloch
- 8: Exzenter
- 9: Gewindebohrung
- 10: Exzenterkopf
- 11: Haltemittel
- 20: konvexe Fläche
- 21: konkave Fläche
- 22: Backe
- 23: Backe
- 24: Haltemittel

## Patentansprüche

1. Fahrzeug, insbesondere ein Flurförderfahrzeug (1), mit mindestens einer Säule (2) und einem Rückhaltesystem für einen Fahrer des Fahrzeugs, wobei das Rückhaltesystem mindestens einen Schutzbügel (6) aufweist, der an der mindestens einen Säule (2) des Fahrzeugs abgestützt ist, **dadurch gekennzeichnet, dass** der mindestens eine Schutzbügel (6) zur Ausrichtung relativ zur mindestens einen Säule (2) mittels mindestens eines Exzenters (8) relativ zur mindestens einen Säule (2) verschwenkbar abgestützt ist, wobei die Verschwenkbarkeit durch mindestens ein Haltemittel (11) arretierbar ist, wobei mindestens zwei Exzenter (8) für unterschiedliche Schwenkrichtungen vorgesehen sind.

2. Fahrzeug nach Anspruch 1, **dadurch gekennzeichnet, dass** an der mindestens einen Säule (2) mindestens eine konkav gekrümmte Fläche (21) vorgesehen ist, welche passend zu mindestens einer konvex gekrümmten Fläche (20) der mindestens einen Abstützung (5) des mindestens einen Schutzbügels (6) ausgebildet ist, um eine Schwenkachse für den mindestens einen Schutzbügel (6) zu erzeugen.

3. Fahrzeug nach Anspruch 1, **dadurch gekennzeichnet, dass** die mindestens eine Säule (2) von mindestens einer Schelle (3) umfasst ist, die mindestens ein Langloch (7) aufweist, in welches einer der mindestens zwei Exzenter (8) eingreift.

4. Fahrzeug nach Anspruch 3, **dadurch gekennzeichnet, dass** das mindestens eine Langloch (7) parallel zur mindestens einen Säule (2) +/- 30° ausgerichtet ist.

5. Fahrzeug nach Anspruch 2, **dadurch gekennzeichnet, dass** die konvex gekrümmte Fläche (20) teilzylinderförmig ausgebildet ist.

6. Fahrzeug nach Anspruch 2 oder 5, **dadurch gekennzeichnet, dass** die mindestens eine Abstützung (5) beidseitig gekrümmt geformt ist und zwischen Backen (22, 23) klemmend gehalten ist, von denen mindestens eine an der mindestens einen Säule (2) abgestützt ist.

7. Fahrzeug nach Anspruch 6, **dadurch gekennzeichnet, dass** die mindestens eine Abstützung (5) von mindestens einem Haltemittel (24) durchsetzt ist, welches die Backen (22, 23) gegeneinander spannt.

## Claims

1. Vehicle, in particular an industrial truck (1), having at least one pillar (2) and a retention system for a driver of the vehicle, wherein the retention system has at least one protective bar (6) which is supported on the at least one pillar (2) of the vehicle, **characterized in that** the at least one protective bar (6) is supported so as to be pivotable relative to the at least one pillar (2) by means of at least one eccentric (8) for alignment relative to the at least one pillar (2), wherein the pivotability is lockable by means of at least one holding means (11), wherein at least two eccentrics (8) are provided for different pivoting directions.

2. Vehicle according to Claim 1, **characterized in that** in that at least one concavely curved surface (21) is provided on the at least one pillar (2), said surface being designed to match at least one convexly curved surface (20) of the at least one support (5) of the at least one protective bar (6) in order to produce a pivot axis for the at least one protective bar (6).

3. Vehicle according to Claim 1, **characterized in that** the at least one pillar (2) is encompassed by at least one clamp (3) which has at least one elongated hole (7) in which one of the at least two eccentrics (8) engages.

4. Vehicle according to Claim 3, **characterized in that** the at least one elongated hole (7) is aligned parallel, +/- 30°, to the at least one pillar (2).

5. Vehicle according to Claim 2, **characterized in that** the convexly curved surface (20) is in the form of a partial cylinder.

6. Vehicle according to Claim 2 or 5, **characterized in that** the at least one support (5) is shaped in a manner curved on both sides and is held in a clamping manner between jaws (22, 23), of which at least one is supported on the at least one pillar (2) .

7. Vehicle according to Claim 6, **characterized in that** the at least one support (5) is penetrated by at least one holding means (24) which clamps the jaws (22, 23) in relation to each other.

## Revendications

1. Véhicule, en particulier convoyeur au sol (1), comprenant au moins un montant (2) et un système de retenue destiné à un conducteur du véhicule, le système de retenue comportant au moins une barre de protection (6) qui est supportée par l'au moins un montant (2) du véhicule, **caractérisé en ce que**
l'au moins une barre de protection (6) étant supportée de manière pivotante par rapport à l'au moins un montant (2) au moyen d'au moins un excentrique (8) pour effectuer une orientation par rapport à l'au moins un montant (2), le pivotement pouvant être bloqué par au moins un moyen de retenue (11), au moins deux excentriques (8) étant prévus pour différentes directions de pivotement.

2. Véhicule selon la revendication 1, **caractérisé en ce qu'au** moins une surface incurvée concave (21) est prévue sur l'au moins un montant (2), laquelle est conçue, en étant adaptée à au moins une surface incurvée convexe (20) de l'au moins un support (5) de l'au moins une barre de protection (6), pour générer un axe de pivotement destiné à l'au moins une barre de protection (6).

3. Véhicule selon la revendication 1, **caractérisé en ce que** l'au moins un montant (2) est entouré par au moins une bride de fixation (3) qui comporte au moins un trou allongé (7) dans lequel s'engage l'un des au moins deux excentriques (8).

4. Véhicule selon la revendication 3, **caractérisé en ce que** l'au moins un trou allongé (7) est orienté parallèlement à l'au moins un montant (2) +/- 30°.

5. Véhicule selon la revendication 2, **caractérisé en ce que** la surface incurvée convexe (20) a une forme partiellement cylindrique.

6. Véhicule selon la revendication 2 ou 5, **caractérisé en ce que** l'au moins un support (5) est incurvé des deux côtés et est maintenu par serrage entre des mâchoires (22, 23), dont au moins une est supportée par l'au moins un montant (2).

7. Véhicule selon la revendication 6, **caractérisé en ce que** l'au moins un support (5) est traversé par au moins un moyen de retenue (24) qui serre les mâchoires (22, 23) l'une contre l'autre.
